# EUROPÄISCHE PATENTSCHRIFT

(11) **EP 1 698 799 B1**
(45) Veröffentlichungstag und Bekanntmachung des Hinweises auf die Patenterteilung: **30.03.2011**
(21) Anmeldenummer: 06002623.4
(22) Anmeldetag: 09.02.2006
(51) Int. Cl.: F16F 15/16, F16F 15/134, F16D 25/12, F16D 21/06

(54) **Torsionsschwingungsdämpfer**
Torsion vibration damper
Amortisseur de vibrations de torsion

(30) Priorität: 01.03.2005 DE 102005009187
(43) Veröffentlichungstag der Anmeldung: 06.09.2006
(73) Patentinhaber: ZF Friedrichshafen AG, 88046 Friedrichshafen (DE)
(72) Erfinder: Schneider, Hans-Jürgen, 97440 Werneck (DE); Walther, Thomas, 97509 Kolitzheim (DE); Makow, Alexander, 97424 Schweinfurt (DE); Dögel, Thomas, 97688 Bad Kissingen (DE); Grosspietsch, Wolfgang, 97422 Schweinfurt (DE); Brand, Rainer, 97508 Grettstadt (DE); Göbel, Hilmar, 97506 Grafenrheinfeld (DE); Feldhaus, Reinhard, 97502 Euerbach (DE); Weth, Jürgen, 97464 Niederwerrn (DE); Zopf, Stefan, 97505 Geldersheim (DE)

(56) Entgegenhaltungen:
- EP-A1- 1 052 421
- DE-A1- 4 128 868
- DE-A1- 10 034 730
- DE-A1- 19 920 542
- DE-A1-102004 007 337

## Beschreibung

Die Erfindung betrifft einen Torsionsschwingungsdämpfer gemäß dem Oberbegriff des Anspruches 1.

Durch die DE 10 2004 007 337 A1 ist ein üblicherweise in einem Getriebegehäuse angeordneter Torsionsschwingungsdämpfer behandelt, bei welchem eine Dämpfungseinrichtung durch zwei mit Axialversatz zueinander angeordnete, in Reihenschaltung verwendete Dämpfungseinheiten gebildet ist. Zur Übertragung von an einem Antrieb, wie beispielsweise der Kurbelwelle einer Brennkraftmaschine, anliegenden Momenten auf die Dämpfungseinrichtung ist am Antrieb ein Eingangsteil befestigt, das mit ersten Beaufschlagungselementen auf je ein Dämpferelement der ersten Dämpfungseinheit einwirkt, wobei sich diese Dämpfungseinheit an einem antriebsseitigen Ansteuerelement abstützt, das ebenso wie ein abtriebsseitiges Ansteuerelement, das zur Beaufschlagung je eines Dämpferelementes der zweiten Dämpfungseinheit dient, Element eines Zwischenteils ist, der sich aus wenigstens einem nabenscheibenförmigen antriebsseitigen Zwischenteilabschnitt, einem durch zwei Deckbleche gebildeten abtriebsseitigen Zwischenteilabschnitt und einem die beiden Zwischenteilabschnitte in Achsrichtung miteinander koppelnden Verbindungsabschnitt gebildet wird. Bei Beaufschlagung eines Dämpferelementes der zweiten Dämpfungseinheit wirkt diese auf zweite Beaufschlagungselemente einer nach radial außen verlaufenden Nabenscheibe ein, die als Ausgangsteil wirksam und mit einem Abtrieb verbunden ist, der beispielsweise zur Aufnahme einer Kopplungsvorrichtung Verwendung finden kann.

Die mit Axialversatz zueinander angeordneten beiden Dämpfungseinheiten des Torsionsschwingungsdämpfers sind wenigstens näherungsweise auf gleichen Radien um eine für beide Dämpfungseinheiten gleiche Drehachse angeordnet, und zwar auf einem vergleichsweise kleinen Radius, der durch den radialen Bauraum vorgegeben ist, welcher für die antriebsseitige Dämpfungseinheit bedingt durch eine dieselbe radial umschließende Starter-Generator-Einheit begrenzt ist. Durch die geringe radiale Baugröße des Torsionsschwingungsdämpfers ist zwar der Bereich radial innerhalb der Starter-Generator-Einheit optimal nutzbar, jedoch ist das verfügbare Verformungsvolumen in Umfangsrichtung bei beiden Dämpfungseinheiten begrenzt, so dass trotz der Ausführung der Dämpfungseinrichtung mit zwei Dämpfungseinheiten keine allzu große Relativdrehbarkeit des Abtriebs gegenüber dem Antrieb verfügbar ist. Hierdurch haftet dem Torsionsschwingungsdämpfer eine begrenzte Entkopplungsgüte an, zumal lediglich die erste Dämpfungseinheit in einem teilweise mit viskosem Medium befüllten Dämpferraum angeordnet und demnach zu einer geschwindigkeitsproportionalen Dämpfung befähigt ist, während die zweite Dämpfungseinheit in sogenannter "trockener Ausbildung" ohne eine solche Dämpfung auskommen muss. Die günstige Baugröße wird demnach durch ein ungünstiges Entkopplungsverhalten erkauft.

In der EP 1 052 421 A1 ist ein ebenfalls in einem Getriebegehäuse vorgesehener Torsionsschwingungsdämpfer bekannt, der mit einem Abtrieb in Form einer Kopplungsvorrichtung mit zwei Kopplungseinheiten zusammenwirkt. Eine derartige Kopplungsvorrichtung wird in Fachkreisen üblicherweise als "Doppelkupplung" bezeichnet. Abweichend von den Dämpfungseinheiten der zuvor gewürdigten DE 10 2004 007 337 A1 befindet sich der in der EP 1 052 421 A1 behandelte Torsionsschwingungsdämpfer gemeinsam mit der Kopplungsvorrichtung in einem von Fluid durchströmbaren Momenten-Übertragungsraum,-so dass dieses Fluid nicht nur eine Kühlungsfunktion im Hinblick auf die Kopplungseinheiten erbringen kann, sondern sich darüber hinaus bei torsionsschwingungsbedingter Beaufschlagung des Torsionsschwingungsdämpfers als geschwindigkeitsproportional wirksames Dämpfungsmedium erweist. Die Dämpfungseinheit des hier behandelten Torsionsschwingungsdämpfers ist zwar auf vergleichsweise großem Radialabstand gegenüber einer Drehachse angeordnet, jedoch steht als Verformungsvolumen auch nur dasjenige dieser einzelnen Dämpfereinheit zur Verfügung. Überdies ist der Torsionsschwingungsdämpfer speziell für kleine Bauräume ungeeignet, da er bei erheblichem radialen Bauraumbedarf keinerlei Bemühungen um Bauraumbegrenzung zumindest in Achsrichtung erkennen lässt. Diesbezüglich günstiger ist ein in der DE 100 34 730 A1, Figur 22, ausgebildeter Torsionsschwingungsdämpfer gestaltet, bei dem allerdings wegen Anordnung der Dämpfungseinheit auf kleinem Radius um eine Drehachse mit unzureichender Entkopplungsgüte aufgrund eines geringen Verformungsvolumens der einzigen Dämpfungseinheit an deren Dämpferelementen in Umfangsrichtung gerechnet werden muss.

Ebenfalls geeignet für extrem kleine Bauräume scheint eine gemäß der DE 33 30 332 A1 betriebene Kopplungsvorrichtung zu sein, bei welcher unter Verzicht auf einen Torsionsschwingungsdämpfer ausschließlich eine Torsionsschwingungsdämpfung unter Nutzung eines bewusst herbeigeführten Schlupfes vorgesehen ist. Bereits in dieser Offenlegungsschrift wird allerdings erkannt, dass eine derartige Vorgehensweise zur Schwingungsdämpfung lediglich mit einem kleinen Schlupf in einer Größenordnung von weniger als 100 Umdrehungen/Minute erfolgen sollte, um negative Auswirkungen hinsichtlich der Wärmeentwicklung auf die Kopplungsvorrichtung nach Möglichkeit auszuschließen. Somit bleibt festzustellen, dass eine derartige Schlupfregelung beim Auftreten stärkerer Torsionsschwingungen sehr rasch an ihre funktionalen Grenzen stößt.

Der Erfindung liegt die Aufgabe zugrunde, einen Torsionsschwingungsdämpfer derart auszubilden, dass dieser einerseits einen vorhandenen Bauraum optimal nutzt, und andererseits eine sehr hohe Entkopplungsgüte gewährleistet.

Diese Aufgabe wird erfindungsgemäß durch die im Anspruch 1 angegebenen Merkmale gelöst.

Der erfindungsgemäße Torsionsschwingungsdämpfer verfügt über eine Dämpfungseinrichtung mit zwei über einen Zwischenteil in Reihe zueinander wirksamen Dämpfungseinheiten, so dass bereits aufgrund der Anzahl dieser Dämpfungseinheiten ein hohes Verformungsvolumen der in den Dämpfungseinheiten jeweils enthaltenen Dämpferelemente in Umfangsrichtung gewährleistet ist. Darüber hinausgehend liegt bei diesem Torsionsschwingungsdämpfer die Besonderheit vor, dass bei wenigstens einer Dämpfungseinheit, optimalerweise hierbei der zweiten Dämpfungseinheit, deren Anordnung gemeinsam mit auf diese Dämpfungseinheit einwirkenden abtriebsseitigen Ansteuerelementen des Zwischenteils und mit einem Abtrieb in einem Momenten-Übertragungsraum einer Kopplungsvorrichtung erfolgt, wobei dieser Momenten-Übertragungsraum über mindestens einen Versorgungszufluss sowie mindestens einen Versorgungsabfluss für Fluid verfügt. Dieses Fluid, das zum einen für eine Kühlung von Kopplungseinheiten der Kopplungsvorrichtung sorgen soll, steht zum anderen der im Momenten-Übertragungsraum angeordneten Dämpfungseinheit als Verdrängungsmedium bei torsionsschwingungsbedingter Dämpferelementenverformung in Umfangsrichtung zur Verfügung, so dass eine äußerst effiziente geschwindigkeitsproportionale Dämpfung erhalten wird. Auf diese Weise liegt mit der zweiten Dämpfungseinheit bereits ein Teil der Dämpfungseinrichtung mit besonderer Entkopplungsgüte vor, was zumal dann zutrifft, wenn diese Dämpfungseinheit radial weit außen angeordnet ist, mit Vorzug sogar radial außerhalb der Kopplungsvorrichtung. Ist hierbei die Dämpfungseinheit zumindest im Wesentlichen mit der Kopplungsvorrichtung axial überlappend, dann besteht in Achsrichtung eine bauraumoptimierte Bauweise. Soll die zweite Dämpfungseinheit zudem mit einer Starter-Generator-Einheit zusammen wirken, kann diese Dämpfungseinheit sogar auf einem derart großen Radialabstand zu einer Drehachse der Dämpfungseinrichtung angeordnet werden, dass sie sich zumindest im Wesentlichen im radialen Erstreckungsbereich der Starter-Generator-Einheit befindet.

Diese im Hinblick auf Entkopplungsgüte optimierte Dämpfungseinheit wird erfindungsgemäß mit einer weiteren Dämpfungseinheit, anspruchsgemäß als erste Dämpfungseinheit bezeichnet, kombiniert, wobei die erste Dämpfungseinheit mit Vorzug in kleinerem Radialabstand zur Drehachse der Dämpfungseinrichtung als die zweite Dämpfungseinheit angeordnet ist, und damit zwar über ein geringeres Verformungsvolumen ihrer Dämpferelemente in Umfangsrichtung verfügt, dafür aber bevorzugt im Getriebegehäuse lediglich einen Bauraum erfordert, bei dem, von der Drehachse ausgehend, nur eine begrenzte radiale Erstreckung-sowie gegebenenfalls auch eine begrenzte axiale Erstreckung zur Verfügung steht. Ein derartiger, nachfolgend kurz als Problembauraum bezeichneter Bauraum liegt beispielsweise beim Vorhandensein eventueller durch das Getriebegehäuse geführter An- oder Abtriebswellen vor, oder aber bei Einsatz einer Starter-Generator-Einheit insbesondere mit Innenläufer, wobei der letztgenannte mit seinem Innendurchmesser die radial verfügbare Erstreckung des Problembauraums und mit seiner Axialerstreckung die axial verfügbare Erstreckung des Problembauraums vorgibt. Kann nun die erste Dämpfungseinheit aufgrund ihrer radial und/oder axial kompakten Bauweise in diesen Problembauraum eingesetzt werden, so wird sie ungeachtet ihres an sich begrenzten Verformungsvolumens dennoch eine Verbesserung der Entkopplungsgüte des Torsionsschwingungsdämpfers bewirken, da sie aufgrund der Reihenschaltung mit der zweiten Dämpfungseinheit das insgesamt in der Dämpfungseinrichtung vorhandene Verformungsvolumen in Umfangsrichtung nochmals spürbar erhöht.

Die erste Dämpfungseinheit ist anspruchsgemäß zwar nicht von einem Fluid durchströmt, kann aber dennoch eine geschwindigkeitsproportionale Dämpfung erbringen, wenn sie in einem Dämpfungsraum angeordnet ist, der mit viskosem Medium, wie beispielsweise hochviskosem Fett, zumindest teilweise befüllt ist.

Besonderes Element des erfindungsgemäßen Torsionsschwingungsdämpfers kann der die beiden Dämpfereinheiten in Wirkverbindung miteinander bringende Zwischenteil sein, was wie folgt erläutert werden soll. In bevorzugter Ausgestaltung verfügt der Zwischenteil über einen Verbindungsabschnitt mit einem radialen Zentralbereich, der vorteilhafterweise auf kleinem Durchmesser um die Drehachse angeordnet ist. Von diesem Verbindungsabschnitt gehen zu den jeweiligen Dämpfereinheiten verlaufende, im Wesentlichen radiale Zwischenteilabschnitte aus. Während die Zwischenteilabschnitte somit auch radial weit außen angeordnete Dämpfungseinheiten mit ihren jeweiligen Ansteuerelementen problemlos erreichen, kann der radiale Zentralbereich des Verbindungsabschnittes wegen seines vergleichsweise kleinen Durchmessers gegenüber der Drehachse eine Ausnehmung in einer Dichtwandung durchdringen, wobei diese Dichtwandung durch Anordnung radial einerends am Getriebegehäuse und radial anderenends am radialen Zentralbereich des Verbindungsabschnittes einerseits für eine wirkungsvolle Sicherung des im Momenten-Übertragungsraums enthaltenen Fluids gegen einen Austritt an ungewollter Austrittsstelle sorgen kann, und andererseits können im Bereich der Aussparung der Dichtwandung vorgenommene Dichtungs- und/oder Lagerungsmaßnahmen gegenüber dem Verbindungsabschnitt auf kleinem Radius um die Drehachse und damit kostengünstig erfolgen. Aufgrund seiner Kontaktzone mit der Dichtwandung verfügt der Verbindungsabschnitt demnach über einen Durchdringungsbereich, der mit Vorzug zur Aufnahme einer Lagerung zum Zweck einer Zentrierung gegenüber der Dichtwandung sowie zur Aufnahme einer Dichtung dient, die zwischen dem Momenten-Übertragungsraum und der die erste Dämpfungseinheit aufnehmenden Gegenseite der Dichtwandung, die, da ohne Fluiddurchfluß, als "Trockenraum" ausgebildet ist, dient.

Wie bereits erwähnt, erstrecken sich die Zwischenteilabschnitte im Wesentlichen radial gegenüber dem Verbindungsabschnitt. Mit Vorzug ist hierbei ein Zwischenteilabschnitt, insbesondere der abtriebsseitige, einstückig mit dem Verbindungsabschnitt ausgebildet oder an demselben befestigt, während der jeweils andere Zwischenteilabschnitt, mit Vorzug also der antriebsseitige Zwischenteilabschnitt, mittels einer lösbaren Verbindung, wie beispielsweise einer Verzahnung, auf dem Verbindungsabschnitt aufgesetzt ist. Dadurch kann beim Fertigungsvorgang zunächst der die erste Dämpfungseinheit aufnehmende Dämpfungsraum unter Verwendung von Befestigungsmitteln, wie beispielsweise von Kurbelwellenschrauben, am Antrieb, wie der Kurbelwelle einer Brennkraftmaschine, befestigt werden, um anschließend den die zweiten Dämpfungseinheiten enthaltenden Momenten-Übertragungsraum durch eine Axialbewegung gegenüber dem Dämpfungsraum in Richtung zu demselben einzuschieben, wobei der Verbindungsabschnitt in den antriebsseitigen Zwischenteilabschnitt eindringt, bis eine endgültige Verbindung zustande gekommen ist. Mit Vorzug wird die lösbare Verbindung zwischen dem Verbindungsabschnitt und dem jeweiligen Zwischenteilabschnitt durch eine Verzahnung, idealerweise durch eine Axialverzahnung gebildet, die bekanntermaßen eine axiale Relativbewegung zulässt, in Umfangsrichtung dagegen eine Drehsicherung bewirkt. Derart ausgebildet, sind die beiden Dämpfereinheiten als zwei jeweils vorgefertigte Module auf einfache Weise zu einer Gesamteinheit fügbar. Aufgrund dieser Ausgestaltung ergibt sich außerdem bei Ausbildung der lösbaren Verbindung mit radialem Spiel der Vorzug, dass Taumelbewegungen des Dämpfungsraums zumindest stark abgeschwächt auf den Momenten-Übertragungsraum gelangen, und somit dort die Lagerbelastung erheblich reduziert ist.

Einige der Unteransprüche sind auf weiterbildende Maßnahmen zur nochmals weitergehenden Optimierung des Torsionsschwingungsdämpfers gerichtet. So liegen beispielsweise wegen der Ausbildung des Verbindungsabschnittes mit kleinem Durchmesser um die Drehachse größere Radialerstreckungen ausschließlich an den beiden Zwischenteilabschnitten des die beiden Dämpfungseinheiten untereinander koppelnden Zwischenteils vor, so dass sich für den letztgenannten ein sehr geringes Massenträgheitsmoment ergibt, was beim überaus größten Teil betroffener Antriebsstränge in Kraftfahrzeugen erwünscht ist.

Das dem Antrieb zugeordnete primärseitige Massenträgheitsmoment kann, insbesondere bei Anwesenheit einer mit Innenläufer ausgebildeten Starter-Generator-Einheit, aufgrund des Innenläufers bereits vergleichsweise hohe Werte aufweisen. Bringt der Antrieb, hierbei insbesondere die Kurbelwelle einer Brennkraftmaschine beispielsweise ein Massenträgheitsmoment von etwa 0,08 bis 0,09 kgm² ein, wird dieses durch das Massenträgheitsmoment des Innenläufers von etwa 0,05 kgm² nochmals erhöht. Im Gegensatz dazu ist das Massenträgheitsmoment zwischen den beiden Dämpfungseinheiten der Dämpfungseinrichtung, also am Zwischenteil, relativ gering, indem sich ein Wert von etwa 0,015 kgm² ergibt, der zu etwa ²/₃ dem Dämpfungsraum und zu etwa ⅓ dem Momenten-Übertragungsraum zukommt. Am Zwischenteil kann es demnach aus schwingungstechnischen Gründen sinnvoll sein, durch Einbringung einer Zusatzmasse das Massenträgheitsmoment anzuheben. Was den Abtrieb betrifft, so ist wiederum ein höheres Massenträgheitsmoment vorhanden, das beispielsweise bei Ausbildung der Kopplungsvorrichtung als fluiddurchströmte Doppelkupplung in einer Größenordnung von etwa 0,09 kgm² liegen kann. Auch dieses - Massenträgheitsmoment ist gegebenenfalls durch Zusatzmassen, vorteilhafterweise an der Kopplungsvorrichtung angebunden, erhöhbar.

Sollte aus den zuvor ausgeführten Gründen am Zwischenteil zur Vergrößerung des Massenträgheitsmomentes eine Zusatzmasse gefordert werden, dann wird diese, dem Ziel des Torsionsschwingungsdämpfers, nämlich der Bauraumoptimierung folgend, mit Vorzug innerhalb des Dämpfungsraums untergebracht.

Darüber hinaus kann beim vorliegenden Torsionsschwingungsdämpfer die Möglichkeit geschaffen werden, bei bestimmten Betriebszuständen, bei denen mit gegenüber den übrigen Betriebszuständen deutlich vergrößerten Torsionsschwingungen zu rechnen ist, eine Glättung der Torsionsschwingungen im Bereich ihrer jeweiligen Maxima durch Einleitung eines definierten geringen Schlupfes an der Kopplungsvorrichtung vorzunehmen. Die restliche Torsionsschwingung kann dagegen durch die Dämpfungseinheiten des Torsionsschwingungsdämpfers ausgeglichen werden.

Im Folgenden wird ein Ausführungsbeispiel der Erfindung anhand einer Zeichnung näher erläutert. Es zeigt:

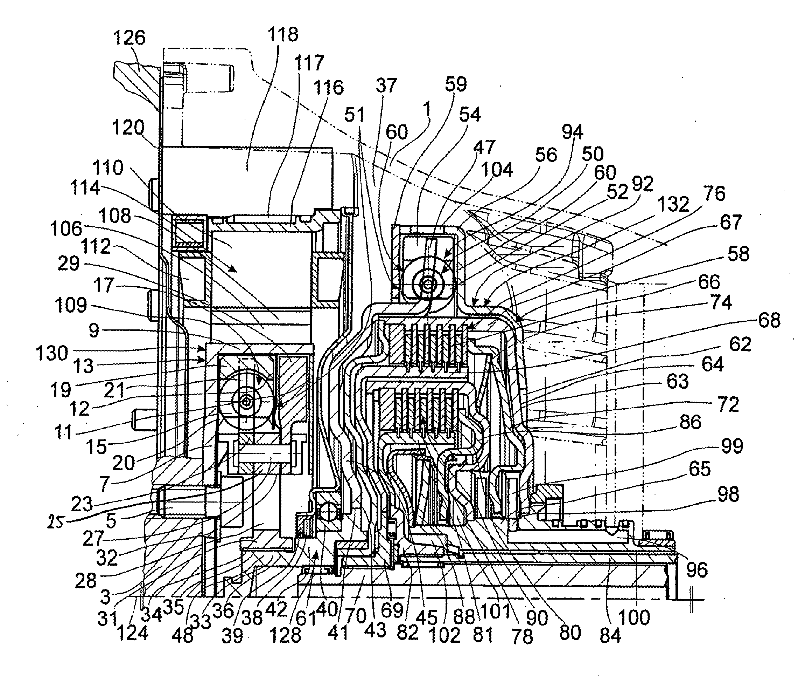

- Figur 1:: Die obere Hälfte eines Längsschnittes durch einen Torsionsschwingungs- dämpfer.

In einem für ein Kraftfahrzeug vorgesehenen Getriebegehäuse 1 ist ein Torsionsschwingungsdämpfer 61 sowie eine Kopplungsvorrichtung 58 angeordnet, die gemeinsam um eine Drehachse 124 drehbar sind. Der Torsionsschwingungsdämpfer 61 ist unter Verwendung von Befestigungsmitteln 5 an einem lediglich schematisch dargestellten Antrieb 3 befestigt, der durch die Kurbelwelle einer Brennkraftmaschine gebildet werden kann. Ebenfalls nur schematisch dargestellt ist ein Antriebsgehäuse 126, beispielsweise ein Motorblock, in welchem der Antrieb 3 drehbar gelagert ist.

Durch die Befestigungsmittel 5 wird ein Radialflansch 7 am Antrieb 3 befestigt, wobei sich der Radialflansch 7, ausgehend von den Befestigungsmitteln 5, nach radial außen erstreckt, und dort in eine Axialerstreckung 9 übergeht, an deren vom Radialflansch 7 abgewandten Ende wiederum eine nach radial innen greifende Deckplatte 11 befestigt ist. Radialflansch 7, Axialerstreckung 9 und Deckplatte 11 bilden gemeinsam einen Dämpfungsraum 13, in welchem Dämpferelemente 15 einer ersten Dämpfungseinheit 17 aufgenommen sind, und zwar, sich radial außen über Gleitelemente 19 an der Axialerstreckung 9 abstützend. Bei diesen Gleitelementen 19 handelt es sich um Federtöpfe oder Gleitschuhe, wie sie beispielsweise aus der DE 41 28 868 A1 bekannt sind. Sowohl am Radialflansch 7 als auch an einer sich von der Axialerstreckung 9 nach radial innen ausdehnenden Zwischenplatte 12, die axial zwischen dem Radialflansch 7 und der Deckplatte 11 vorgesehen ist, sind jeweils erste Beaufschlagungselemente 20 für je ein benachbartes Dämpferelement 15 der ersten Dämpfungseinheit 17 vorgesehen, die sich anderenends an jeweils einem antriebsseitigen Ansteuerelement 21 abstützt. Dieses antriebsseitige Ansteuerelement 21 ist an einer ersten Nabenscheibe 23 realisiert, die gemeinsam mit einer Zusatzmasse 29 mittels einer Vernietung 27 an einer Nabe 25 befestigt ist, die für einen axialen Durchgang der Befestigungsmittel 5 mit entsprechenden Montageöffnungen 28 versehen ist. Die erwähnte Zusatzmasse 29 ist im Dämpfungsraum 13 angeordnet, und zwar axial zwischen der Zwischenplatte 12 und der Deckplatte 11.

Am radial inneren Ende der Nabe 25 ist ein Nabenfuß 31 vorgesehen, der über eine lösbare Verbindung 34 in Form einer Verzahnung 35 mit radialem Spiel auf einen zapfenförmigen Verbindungsabschnitt 33 und hierbei insbesondere auf einem radialen Zentralbereich 36 desselben angeordnet ist. Aufgrund dieser lösbaren Verbindung 34 besteht sowohl eine axiale als auch eine - wenn auch spielbedingt geringe - radiale Relativbewegbarkeit bei gleichzeitiger drehfester Verbindung in Umfangsrichtung zwischen der Nabe 25 und dem Verbindungsabschnitt 33, wobei die Nabe 25 gemeinsam mit der die antriebsseitigen Ansteuerelemente 21 aufweisenden ersten Nabenscheibe 23 einen antriebsseitigen Zwischenteilabschnitt 32 eines Zwischenteils 48 bildet, dem weiterhin der Verbindungsabschnitt 33 sowie ein an dessen vom antriebsseitigen Zwischenteilabschnitt 32 abgewandten Ende vorgesehener abtriebsseitiger Zwischenteilabschnitt 45 angehört. Dieser ist als sich im Wesentlichen nach radial außen erstreckende, zweite Nabenscheibe 43 ausgebildet, und mittels einer Verbindung 41, beispielsweise einer Schweißverbindung, am Verbindungsabschnitt 33 befestigt.

Axial zwischen dem antriebsseitigen Zwischenteilabschnitt 32 und dem abtriebsseitigen Zwischenteilabschnitt 45 erstreckt sich eine Dichtwandung 37, die radial außen dichtend am Getriebegehäuse 1 angreift, und radial innen über eine Aussparung 38 zum Durchgang des Verbindungsabschnittes 33 verfügt. Die Dichtwandung 37 ist im radialen Erstreckungsbereich der Aussparung 38 mit einer Dichtung 39 sowie mit einer Lagerung 40 versehen, wobei sowohl die Dichtung 39 als auch die Lagerung 40 sich jeweils am radialen Zentralbereich 36 des Verbindungsabschnittes 33 abstützen, wobei der entsprechende Axialbereich des Verbindungsabschnittes 33 nachfolgend als Durchdringungsbereich 42 bezeichnet ist. Durch die Dichtung 39 soll eine fluiddichte Trennung des antriebsseitigen Teils des Zwischenteils 48 gegenüber dessen abtriebsseitigem Teil erzielt werden, während durch die Lagerung 40 eine Zentrierung des Zwischenteils 48 gegenüber der Dichtwandung 37 bewirkt werden soll. Der Zwischenteil 48 seinerseits ist radial über eine Lagerung 128 gegenüber einer ersten Abtriebswelle 70 zentriert, die ihrerseits eine zweite Abtriebswelle 84 zentriert, die wiederum unter Bereitstellung einer Versorgungsleitung 100 durch eine Abtriebsnabe 65 mit Distanz in Radialrichtung umschlossen ist.

Der abtriebsseitige Zwischenteilabschnitt 45 ist in seinem radialen Außenbereich mit abtriebsseitigen Ansteuerelementen 47 versehen, welche zur Beaufschlagung einer zweiten Dämpfungseinheit 50 dienen. Die letztgenannte ist an ihrer vom Antrieb 3 abgewandten Seite sowie radial außen durch einen Gehäusedeckel 56 umschlossen, an welchem antriebsseitig eine Abdeckplatte 59 nach radial innen greifend befestigt ist. Der radiale Außenteil des Gehäusedeckels 56 dient zur radialen Abstützung der zweiten Dämpfungseinheit 50, und zwar mittels Gleitelementen 54, die radial zwischen Dämpferelementen 52 der zweiten Dämpfungseinheit 50 und dem Außenteil des Gehäusedeckels 56 vorgesehen sind. Auch diese Gleitelemente 54 sind nach dem Vorbild der DE 41 28 868 A1 gestaltet und funktionieren entsprechend. Sowohl am abtriebsseitigen Radialteil des Gehäusedeckels 56 als auch an der Abdeckplatte 59 sind jeweils der zweiten Dämpfungseinheit 50 zugewandt zweite Beaufschlagungselemente 60 vorgesehen, an welchen sich das jeweils zugeordnete Dämpfungselement 52 nach Beaufschlagung der zweiten Dämpfungseinheit 50 durch die abtriebsseitigen Ansteuerelemente 47 abstützt. Die zweite Dämpfungseinheit 50 bildet gemeinsam mit der ersten Dämpfungseinheit 17 eine Dämpfungseinrichtung 51 des Torsionsschwingungsdämpfers 61.

Vom Antrieb 3 über die Dämpfungseinrichtung 51 auf den Gehäusedeckel 56 geleitete Momente führen zu einer Auslenkbewegung des Gehäusedeckels 56 um die Drehachse 124, wobei der Gehäusedeckel 56 abtriebsseitig radial innerhalb der zweiten Dämpfungseinheit 50 in Umfangsrichtung mehrere Aussparungen 62 aufweist, die sich im Wesentlichen in Radialrichtung erstrecken und von ebenfalls radial verlaufenden Zungen 63 eines radial äußeren Außenlamellenträgers 67 im Wesentlichen ohne Spiel in Umfangsrichtung durchgriffen sind. Durch die Zungen 63 entsteht in Verbindung mit den Aussparungen 62 eine Drehverbindung 64 zwischen dem Gehäusedeckel 56, welcher dem Torsionsschwingungsdämpfer 61 zugeordnet ist, und dem radial äußeren Außenlamellenträger 67, bei dem eine Zuordnung zur Kopplungsvorrichtung 58 besteht, und der radial innen an der Abtriebsnabe 65, beispielsweise mittels einer Verschweißung, befestigt ist,.

Der radial äußere Außenlamellenträger 67 kann über ein radial äußeres Lamellenpaket - 66 in Drehverbindung mit einem radial äußeren Innenlamellenträger 68 gebracht werden, und zwar bei entsprechender Beaufschlagung eines gegen eine erste Axialfeder 74 wirksamen ersten Kolbens 72. Zur Betätigung des ersten Kolbens 72 sind Steuerzuflüsse vorgesehen, von denen lediglich ein Steuerzufluss 98 zeichnerisch dargestellt ist, der zur Versorgung einer Druckkammer 99 vorgesehen ist, über welcher der erste Kolben 72 gegen die Wirkung der ersten Axialfeder 74 in Richtung zu dem radial äußeren Lamellenpaket 66 bewegbar ist, und hierbei für ein Einrücken durch Anpressen der einzelnen Lamellen gegeneinander sorgt. Die Steuerungszuflüsse sind jeweils durch eine zugeordnete Steuerungsleitung versorgbar, wobei die dem Steuerungszufluss 98 zugeordnete Steuerungsleitung 96 eingezeichnet ist. Die Versorgung der Steuerungsleitung 96 erfolgt durch eine in Fig. 1 nicht eingezeichnete externe Druckquelle. Ein Ausrücken des ersten Kolbens 72 kann durch Druckentlastung am Steuerungszufluss 98 erfolgen, so dass der erste Kolben 72 unter Mitwirkung der ersten Axialfeder 74 in seine in Fig. 1 eingezeichnete Ausgangsposition zurückgeschoben wird. Durch die bislang beschriebenen Bauteile der Kopplungsvorrichtung 58 wird eine erste Kopplungseinheit 76 gebildet.

Radial innerhalb dieser ersten Kopplungseinheit 76, deren Innenlamellenträger 68 über eine Nabe 69 drehfest an der ersten Abtriebswelle 70 aufgenommen ist, kann die durch den äußeren Außenlamellenträger 67 vom Torsionsschwingungsdämpfer 61 aufgenommene Drehbewegung auf die erste Abtriebswelle 70 geleitet werden. Radial innerhalb der ersten Kopplungseinheit 76 befindet sich eine zweite Kopplungseinheit 90, aufweisend einen radial inneren Außenlamellenträger 78 sowie einen radial inneren Innenlamellenträger 81, die über ein radial inneres Lamellenpaket 80 miteinander in Wirkverbindung bringbar sind, und zwar dann, wenn über einen nicht gezeigten Steuerungszufluss eine Druckbeaufschlagung eines Druckraumes 101 erfolgt, und zwar gegen die Wirkung einer zweiten Axialfeder 88, woraufhin ein Einrücken des zweiten Kolbens 86 erfolgt. Zum Ausrücken wird wiederum der Druckraum 101 druckentlastet. Zusätzlich kann, bei beiden Kopplungseinheiten 76, 90, zum Ausrücken jeweils ein Raum mit Überdruck beaufschlagt werden, der an der jeweils vom Druckraum 99,101 abgewandten Seite des jeweiligen Kolbens 72, 86 vorgesehen ist.

Im eingerückten Zustand der zweiten Kopplungseinheit 90 wird am ein radial äußeren Außenlamellenträger 67 und damit an der Abtriebsnabe 65 anliegendes Moment von der letztgenannten auf den radial inneren Außenlamellenträger 78 übertragen, der dieses Moment über das radial innere Lamellenpaket 80 auf eine Nabe 82 und von dieser aufgrund einer Drehverbindung mit der zweiten Abtriebswelle 84 auf die letztgenannte überträgt. Weitere Einzelheiten, den Aufbau und die Funktion einer derartigen Kopplungsvorrichtung 58 mit zwei Kopplungseinheiten 76, 90, die in Fachkreisen als "Doppelkupplung" bezeichnet ist, können beispielsweise der eingangs bereits genannten DE 100 34 730 A1 entnommen werden, und sind daher nicht näher zu erläutern.

Sowohl die zweite Dämpfungseinheit 50, als auch die beiden Kopplungseinheiten 76 und 90 sind in einem Raum angeordnet, der nach radial außen im Wesentlichen durch den Gehäusedeckel 56 und die Abdeckplatte 59 abgeschlossen ist, antriebsseitig im Wesentlichen durch den ringförmigen abtriebsseitigen Zwischenteilabschnitt 45 und abtriebsseitig im Wesentlichen durch den Gehäusedeckel 56 in Verbindung mit dem radial äußeren Außenlamellenträger 67. Dieser Raum ist nachfolgend kurz als Momenten-Übertragungsraum 94 bezeichnet, und wird von Fluid durchströmt. Dieses Fluid wird von einer nicht gezeigten Druckquelle aus über Versorgungsleitungen und Versorgungszuflüsse in den Momenten-Übertragungsraum 94 eingeleitet, wobei nur eine solche Versorgungsleitung 100 und lediglich ein Versorgungszufluss 102 zeichnerisch dargestellt sind. Dieses Fluid, das im Wesentlichen zur Kühlung der Lamellenpakete 66, 80 der beiden Kopplungseinheiten 76, 90 dienen soll, strömt nach radial außen und steht demnach im radialen Erstreckungsbereich der zweiten Dämpfungseinheit 50 als Dämpfungsmedium zur Verfügung, bevor es über einen Versorgungsabfluss 104 den Momenten-Übertragungsraum 94 wieder verlässt.

Da die zweite Dämpfungseinheit 50 sich im radial äußeren Bereich des Momenten-Übertragungsraums befindet, steht zum einen hinreichend Bauraum für ein großes Dämpferelementenvolumen in Umfangsrichtung zur Verfügung, so dass große Relativdrehauslenkwinkel zwischen dem abtriebsseitigen Zwischenteilabschnitt 45 und einem Abtrieb 92 bestehen, der im Wesentlichen aus dem Gehäusedeckel 56 und der Kopplungsvorrichtung 58 gebildet ist. Außerdem kann aufgrund des Fluids Verformungen der Dämpfungselemente 52 geschwindigkeitsproportional entgegen gewirkt werden. Somit ist durch die zweite Dämpfungseinheit 50 sowohl eine hervorragende Entkopplungsgüte, als auch ein gutes Dämpfungsverhalten - realisierbar.

Funktional ist die erste Dämpfungseinheit 17 aufgrund ihrer Anordnung auf radial kleinerem Durchmesser als die zweite Dämpfungseinheit 50 sowie aufgrund ihrer Anordnung in einem zumindest im Wesentlichen trockenen Dämpfungsraum 13 benachteiligt, jedoch ergibt sich durch die erste Dämpfungseinheit 17 der Vorteil, dass diese bereits die gröbsten Maxima von Torsionsschwingungen zwischen Antrieb 3 und zweiter Dämpfungseinheit 50 herausfiltert, und demnach trotz ihres gegenüber der zweiten Dämpfungseinheit 50 begrenzten Dämpferelementenvolumens in Umfangsrichtung die Entkopplungsgüte des Torsionsschwingungsdämpfers 61 verbessert. Bedingt durch ihre radial geringe Ausdehnung vermag die erste Dämpfungseinheit 17 allerdings erhebliche Bauraumvorteile insbesondere in Achsrichtung einzubringen, was sich wie folgt erklärt:

Bei Kombination des Torsionsschwingungsdämpfers 61 sowie der Kopplungsvorrichtung 58 mit einer Starter-Generator-Einheit 114, insbesondere einer solchen mit einem als Innenläufer ausgebildeten Rotor 109, entsteht ein von diesem Rotor 109 umschlossener "Problembauraum", für den aufgrund begrenzter radialer Abmessungen nicht selten Nutzungsmöglichkeiten fehlen, und der demnach als ungenutzter Freiraum verbleiben muss. Dieser Situation kann durch die erste Dämpfungseinheit 17 aufgrund deren radial geringer Ausdehnung abgeholfen werden, indem die erste Dämpfungseinheit 17 in den Problembauraum eintaucht, um dort mit dem Rotor 109 drehschlüssig verbunden zu werden. Sofern, wie beim Ausführungsbeispiel, der Dämpfungsraum 13 bezüglich seiner Breite zumindest im Wesentlichen an den Rotor 109 der Starter-Generator-Einheit 114 angepaßt ist, wird der Problembauraum auch in Achsrichtung nahezu vollständig genutzt, was insbesondere dann zutrifft, wenn eine Zusatzmasse 29 in diesen Dämpfungsraum 13 integriert ist, die erforderlich werden kann, um das Massenträgheitsmoment des Zwischenteils 48 zu erhöhen. Insofern kann die erste Dämpfungseinheit 17 einen erheblichen Beitrag zu einer axial kompakten Bauweise beitragen.

Weitere Vorteile der ersten Dämpfungseinheit 17 ergeben sich im Zusammenhang mit der lösbaren Verbindung 34 zwischen dem Nabenfuß 31 des antriebsseitigen Zwischenteilabschnittes 32 und dem Verbindungsabschnitt 33.

So kann insbesondere dann, wenn diese lösbare Verbindung 34 mit einem vorbestimmten Radialspiel ausgebildet ist, ein Ausgleich von durch den Antrieb 3 auf die erste Dämpfungseinheit 17 eingeleiteten Taumelbewegungen erfolgen, bevor diese auf den Verbindungsabschnitt 33 und damit an die zweite Dämpfungseinheit 50 übertragen werden. Derartige Taumelbewegungen werden bei Radialauslenkungen des Antriebs 3 quer zur Drehachse 124 ausgelöst, und können zu Schäden an Lagerungen in der Kopplungsvorrichtung 58 führen, wie beispielsweise an der Lagerung 40 und/oder 128.

Aufgrund der lösbaren Verbindung 34 ist in einem ersten Fertigungsschritt ein antriebsseitiges Modul 130, gebildet aus dem Dämpfungsraum 13 mit der ersten Dämpfungseinheit 17 und dem antriebsseitigen Zwischenteilabschnitt 32, unter Verwendung der Befestigungsmittel 5 am Antrieb 3 montierbar, um anschjießend in einem zweiten Fertigungsschritt ein dem Verbindungsabschnitt 33 zugeordnetes abtriebsseitiges Modul 132 zu montieren. Dieses abtriebsseitige Modul 132 enthält, außer dem bereits genannten Verbindungsabschnitt 33, auch den abtriebsseitigen Zwischenteilabschnitt 45, die zweite Dämpfungseinheit 50 sowie den die Kopplungsvorrichtung 58 umfassenden Abtrieb 92, und wird durch eine Axialbewegung in seine in Fig. 1 eingezeichnete Endposition eingeschoben. Hierdurch wird eine problemlose Montierbarkeit der Gesamtanordnung sichergestellt.

Die bereits erwähnte Starter-Generator-Einheit 114 ist außer mit dem Rotor 109, der sowohl über ein Blechpaket 106 als auch über dasselbe umschließende Magnete 108 verfügt, auch mit einem Stator 110 ausgebildet, in welchem die Spulenwicklungen 112 vorgesehen sind. Der Stator 110 ist in einem Trägerelement 116 aufgenommen, das an einem Aufnahmeblock 118 befestigt ist und Kühlkanäle 117 aufweist Der Aufnahmeblock 118 seinerseits kann Teil des Getriebegehäuses 1 sein und dient zur Anbindung des letztgenannten an das Antriebsgehäuse 126, wobei bei Ausführung dieses Antriebsgehäuses 126 aus Leichtmetall, wie beispielsweise aus Aluminium, eine Zwischenwandung 120 eingesetzt sein kann, um eine elektrochemische Korrosion durch Bauteilkontakt wirksam zu vermeiden. Diese Zwischenwandung 120 kann durch ein handelsübliches Blech gebildet werden.

Trotz der unbestritten hohen Entkopplungsgüte des Torsionsschwingungsdämpfers können bei besonders kritischen Betriebszuständen, beispielsweise bei Zugbetrieb unter Volllast, insbesondere bei niedrigen Drehzahlen, Torsionsschwingungen einer solchen Stärke auftreten, dass eine zusätzliche Dämpfung erforderlich werden kann. Hierz kann vorgesehen sein, mittels einer nicht gezeigten Steuerungseinrichtung den auf den jeweils eingerückten Kolben 72, 86 ausgeübten Anpressdruck im jeweiligen Druckraum 99, 101 geringfügig zurückzunehmen und hierdurch aufgrund der reduzierten Anpresskraft des Kolbens einen zeitlich und wirkungsmäßig begrenzten Schlupf zuzulassen. Hierdurch können zumindest die Maxima einer Torsionsschwingung geringfügig geglättet werden. Sofern die schlupfbedingten Differenzdrehzahlen kleiner als etwa 20 Umdrehungen pro Minute bleiben, sind weder thermische noch verschleißbedingte Schäden an der jeweiligen Kopplungseinheit 76 oder 90 zu erwarten. Aufgrund einer derartigen Ansteuerung der Kopplungseinheiten 76, 90 besteht demnach ohne konstruktiven Aufwand die Möglichkeit, die Entkopplungsgüte des Torsionsschwingungsdämpfers 61 nochmals zu verbessern.

### Bezugszeichenliste

- 1.: Getriebegehäuse
- 3.: Antrieb
- 5.: Befestigungsmittel
- 7.: Radialflansch
- 9.: Axialerstreckung
- 11.: Deckplatte
- 12.: Zwischenplatte
- 13.: Dämpfungsraum
- 15.: Dämpferelement
- 17.: erste Dämpfungseinheit
- 19.: Gleitelement
- 20.: erste Beaufschlagungselemente
- 21.: antriebsseitige Ansteuerelemente
- 23.: erste Nabenscheibe
- 25.: Nabe
- 27.: Vernietung
- 28.: Montageöffnungen
- 29.: Zusatzmasse
- 31.: Nabenfuß
- 32.: antriebsseitiger Zwischenteilabschnitt
- 33.: Verbindungsabschnitt
- 34.: lösbare Verbindung
- 35.: Verzahnung
- 36.: radialer Zentralbereich
- 37.: Dichtwandung
- 38.: Aussparung
- 39.: Dichtung
- 40.: Lagerung
- 41.: Verbindung
- 42.: Durchdringungsbereich
- 43.: zweite Nabenscheibe
- 45.: abtriebsseitiger Zwischenteilabschnitt
- 47.: abtriebsseitiges Ansteuerelemente
- 48.: Zwischenteil
- 50.: zweite Dämpfungseinheit
- 51.: Dämpfungseinrichtung
- 52.: Dämpferelemente
- 54.: Gleitelement
- 56.: Gehäusedeckel
- 58.: Kopplungsvorrichtung
- 59.: Abdeckplatte
- 60.: zweite Beaufschlagungselemente
- 61.: Torsionsschwingungsdämpfer
- 62.: Aussparungen
- 63.: Zungen
- 64.: Drehverbindung
- 65.: Abtriebsnabe
- 66.: radial äußeres Lamellenpacket
- 67.: radial äußerer Außenlamellenträger
- 68.: radial äußerer Innenlamellenträger
- 69.: Nabe
- 70.: erste Abtriebswelle
- 72.: erster Kolben
- 74.: erste Axialfeder
- 76.: erste Kopplungseinheit
- 78.: radial innerer Außenlamellenträger
- 80.: radial inneres Lamellenpacket
- 81.: radial innerer Innenlamellenträger
- 82.: Nabe
- 84.: zweite Abtriebswelle
- 86.: zweiter Kolben
- 88.: zweite Axialfeder
- 90.: zweite Kopplungseinheit
- 92.: Abtrieb
- 94.: Momenten-Übertragungsraum
- 96.: Steuerungsleitung
- 98.: Steuerungszufluß
- 99.: Druckraum
- 100.: Versorgungsleitung
- 101.: Druckraum
- 102.: Versorgungszufluß
- 104.: Versorgungsabfluß
- 106.: Blechpacket
- 108.: Magnete
- 109.: Rotor
- 110.: Stator
- 112.: Spulenwicklungen
- 114.: Starter-Generator-Einheit
- 116.: Trägerelement
- 117.: Kühlkanäle
- 118.: Aufnahmeblock
- 120.: Zwischenwandung
- 124.: Drehachse
- 126.: Antriebsgehäuse
- 128.: Lagerung
- 130.: antriebsseitiges Modul
- 132.: abtriebsseitiges Modul

## Patentansprüche

1. Torsionsschwingungsdämpfer (61) in einem Getriebegehäuse (1), aufweisend einen Eingangsteil, der an einen Antrieb (3) angebunden und zur Beaufschlagung einer ersten Dämpfungseinheit (17) einer Dämpfungseinrichtung vorgesehen ist, einen Zwischenteil (48), der zum einen als Ausgang der ersten Dämpfungseinheit wirksam und zur Beaufschlagung derselben mit antriebsseitigen Ansteuerelementen (21) versehen ist, und der zum anderen als Eingang einer zweiten Dämpfungseinheit (50) der Dämpfungseinrichtung wirksam und zur Beaufschlagung derselben mit abtriebsseitigen Ansteuerelementen (47) versehen ist, und einen Ausgangsteil, der mit der zweiten Dämpfungseinheit (50) in Wirkverbindung steht und zur Aufnahme eines Abtriebs vorgesehen ist, wobei wenigstens die antriebsseitigen Ansteuerelemente (21) in einen die erste Dämpfungseinheit (17) enthaltenden, frei von Versorgungszu- oder Abflüssen für Fluid ausgebildeten Dämpfungsraum eingreifen, und beide Dämpfungseinheiten zumindest im Wesentlichen um die gleiche Drehachse (124) vorgesehen sind,
**dadurch gekennzeichnet,**
**dass** wenigstens die abtriebsseitigen Ansteuerelemente (47) des Zwischenteils (48), die zweite Dämpfungseinheit (50) und der Abtrieb (92) in einem mit mindestens einem Versorgungszufluß (102) sowie mindestens einem Versorgungsabfluß (104) versehenen Momenten-Übertragungsraum (94) einer Kopplungsvorrichtung (58) aufgenommen sind.

2. Torsionsschwingungsdämpfer nach Anspruch 1,
**dadurch gekennzeichnet,**
**dass** die innerhalb des Dämpfungsraums (13) angeordnete erste Dämpfungseinheit (17) auf kleinerem Radialabstand (R₁) gegenüber der Drehachse (124) als die innerhalb des Momenten-Übertragungsraums (94) angeordnete zweite Dämpfungseinheit (50) mit dem Radialabstand (R₂) vorgesehen ist.

3. Torsionsschwingungsdämpfer nach Anspruch 2,
**dadurch gekennzeichnet,**
**dass** die zweite Dämpfungseinheit (50) auf einem Radialabstand (R₂) um die Drehachse (124) vorgesehen ist, bei welcher sie, die Kopplungsvorrichtung (58) radial umgreifend, zumindest mit einem wesentlichen Teil ihrer Axialerstreckung, axial überlappend mit der Kopplungsvorrichtung (58) angeordnet ist.

4. Torsionsschwingungsdämpfer nach Anspruch 1, 2 oder 3 mit einem Zwischenteil, der über einen die antriebsseitigen Ansteuerelemente aufweisenden antriebsseitigen Zwischenteilabschnitt, einen die abtriebsseitigen Ansteuerelemente aufweisenden abtriebsseitigen Zwischenteilabschnitt und einen die beiden Zwischenteilabschnitte in Wirkverbindung miteinander versetzenden Verbindungsabschnitt aufweist,
**dadurch gekennzeichnet,**
**dass** der antriebsseitige Zwischenteilabschnitt (32) außerhalb des Momenten-Übertragungsraums (94) und der abtriebsseitige Zwischenteilabschnitt (45) innerhalb des Momenten-Übertragungsraums (94) angeordnet ist, und dass der Verbindungsabschnitt (33) für den Durchgang durch eine Aussparung (38) einer zwischen dem Dämpfungsraum (13) und dem Momenten-Übertragungsraum (94) vorgesehenen Dichtwandung (37) mit einem Durchdringungsbereich (42) versehen ist, welcher der im Momenten-Übertragungsraum (94) vorhandenen Fluidbefüllung ausschließlich abtriebsseitig einer der Aussparung (38) der Dichtwandung (37) zugeordneten Dichtung (39) ausgesetzt ist.

5. Torsionsschwingungsdämpfer nach Anspruch 4,
**dadurch gekennzeichnet,**
**dass** die Dichtwandung (37) radial einerends am Getriebegehäuse (1) fluiddicht aufgenommen ist, und radial anderenends die mit dem Durchdringungsbereich (42) des Verbindungsabschnittes (33) zusammenwirkende Dichtung (39) aufnimmt.

6. Torsionsschwingungsdämpfer nach Anspruch 4 oder 5,
**dadurch gekennzeichnet,**
**dass** die Dichtwandung (37) benachbart der Dichtung (39) zur Aufnahme einer Lagerung (40) dient, über welche sie gegenüber dem Durchdringungsbereich (42) des Verbindungsabschnittes (33) zentriert ist.

7. Torsionsschwingungsdämpfer nach Anspruch 6,
**dadurch gekennzeichnet,**
**dass** die Lagerung (40) an der dem Momenten-Übertragungsraum (94) der Kopplungsvorrichtung (58) zugewandten Seite der Dichtung (39) angeordnet ist.

8. Torsionsschwingungsdämpfer nach einem der Ansprüche 1 bis 7,
**dadurch gekennzeichnet,**
**dass** der Verbindungsabschnitt (33) als radialer Zentralbereich (36) des Zwischenteils (48) wirksam ist, von dem aus sich die Zwischenteilabschnitte (32, 45) jeweils nach radial außen erstrecken.

9. Torsionsschwingungsdämpfer nach einem der Ansprüche 1 bis 8,
**dadurch gekennzeichnet,**
**dass** der Verbindungsabschnitt (33) an einem Zwischenteilabschnitt (45) vorgesehen und mittels einer lösbaren Verbindung (34) drehfest, aber axial verlagerbar, mit dem jeweils anderen Zwischenteilabschnitt (32) verbunden ist.

10. Torsionsschwingungsdämpfer nach Anspruch 9,
**dadurch gekennzeichnet,**
**dass** der Verbindungsabschnitt (33) über eine Verzahnung (35) mit dem jeweils anderen Zwischenteilabschnitt (32) verbunden ist.

11. Torsionsschwingungsdämpfer nach Anspruch 8, 9 oder 10,
**dadurch gekennzeichnet,**
**dass** der Verbindungsabschnitt (33) am abtriebsseitigen Zwischenteilabschnitt (45) angeformt und zumindest auf einem Teil seiner Erstreckung von dem antriebsseitigen Zwischenteilabschnitt (32) umgriffen ist, der über die lösbare Verbindung (34) mit dem Verbindungsabschnitt (33) in Drehverbindung steht.

12. Torsionsschwingungsdämpfer nach Anspruch 8, 9, 10 oder 11,
**dadurch gekennzeichnet,**
**dass** der antriebsseitige Zwischenteilabschnitt (32) gemeinsam mit dem Dämpfungsraum (13) und der ersten Dämpfungseinheit (17) als antriebsseitiges Modul (130) dient, während der abtriebsseitige Zwischenteilabschnitt (45) gemeinsam mit dem Momentenübertragungsraum (94), enthaltend die zweite Dämpfungseinheit (50) und die Kopplungsvorrichtung (58), als abtriebsseitiges Modul (132) dient, wobei der Verbindungsabschnitt (33) einem Modul (132) zugeordnet und mit dem jeweils anderen Modul (130) über die lösbare Verbindung (34) in Wirkverbindung steht.

13. Torsionsschwingungsdämpfer nach einem der Ansprüche 1 bis 12,
**dadurch gekennzeichnet,**
**dass** ausgehend vom Verbindungsabschnitt (33) des Zwischenteils (48) die beiden Zwischenteilabschnitte (32, 45) aufgrund der unterschiedlichen Radialabstände (R1, R2) der beiden Dämpfungseinheiten (17, 50) gegenüber der Drehachse (124) über unterschiedliche radiale Erstreckungsweiten verfügen.

14. Torsionsschwingungsdämpfer, insbesondere nach einem der Ansprüche 1 bis 13 mit einer die erste Dämpfungseinheit radial umschließenden und mit Axialversatz zu der zweiten Dämpfungseinheit angeordneten Starter-Generator-Einheit,
**dadurch gekennzeichnet,**
**dass** die zweite Dämpfungseinheit (50) im radialen Erstreckungsbereich der Starter-Generator-Einheit (114) angeordnet ist.

15. Torsionsschwingungsdämpfer nach einem der Ansprüche 1 bis 14,
**dadurch gekennzeichnet,**
**dass** der antriebsseitige Zwischenteilabschnitt (32) zur Aufnahme einer innerhalb des Dämpfungsraums (13) angeordneten Zusatzmasse (29) vorgesehen ist.

16. Torsionsschwingungsdämpfer nach einem der Ansprüche 1 bis 15 mit einer über wenigstens eine Kopplungseinheit verfügenden Kopplungsvorrichtung,
**dadurch gekennzeichnet,**
**dass** zumindest unter vorbestimmbaren Betriebsbedingungen durch Einleitung eines definierten geringen Schlupfes an der zumindest einen Kopplungseinheit (76, 90) die Wirkung der Dämpfungseinrichtung (51) unterstützbar ist.

## Claims

1. Torsional vibration damper (61) in a transmission case (1), having an input part which is tied to a drive (3) and is intended to act upon a first damping unit (17) of a damping device, an intermediate part (48) which, on the one hand, is active as the output of the first damping unit and, for acting upon the latter, is provided with drive-side activation elements (21) and, on the other hand, is active as an input of a second damping unit (50) of the damping device and, for acting upon the latter, is provided with driven-side activation elements (47), and an output part which is operatively connected to the second damping unit (50) and is intended for receiving a power take-off, at least the drive-side activation elements (21) engaging into a damping space containing the first damping unit (17) and designed to be free of supply feeds or discharges for fluid, and both damping units being provided at least essentially about the same axis of rotation (124), **characterized in that** at least the driven-side activation elements (47) of the intermediate part (48), the second damping unit (50) and the power take-off (92) being received in a torque transmission space (94) of a coupling device (58), the said torque transmission space being provided with at least one supply feed (102) and at least one supply discharge (104).

2. Torsional vibration damper according to Claim 1, **characterized in that** the first damping unit (17) arranged within the damping space (13) is provided with a smaller radial clearance (R1) with respect to the axis of rotation (124) than the second damping unit (50) arranged within the torque transmission space (94) and having the radial clearance (R2).

3. Torsional vibration damper according to Claim 2, **characterized in that** the second damping unit (50) is provided with a radial clearance (R2) about the axis of rotation (124) whereby the second damping unit, surrounding the coupling device (58) radially, is arranged, at least with a substantial part of its axial extent, so as to overlap axially with the coupling device (58).

4. Torsional vibration damper according to Claim 1, 2 or 3 with an intermediate part which has a drive-side intermediate-part portion having the drive-side activation elements, a driven-side intermediate-part portion having the driven-side activation elements, and a connection portion connecting the two intermediate-part portions operatively to one another, **characterized in that** the drive-side intermediate-part portion (32) is arranged outside the torque transmission space (94) and the driven-side intermediate-part portion (45) is arranged inside the torque transmission space (94), and **in that** the connection portion (33) is provided, for passage through a cutout (38) of a sealing wall (37) provided between the damping space (13) and the torque transmission space (94), with a penetration region (42) which is exposed to the fluid filling, present in the torque transmission space (94), solely on the driven side of a seal (39) assigned to the cutout (38) of the sealing wall (37).

5. Torsional vibration damper according to Claim 4, **characterized in that** the sealing wall (37), radially at one end, is received, fluid-tight, on the transmission case (1) and, radially at the other end, receives a seal (39) cooperating with the penetration region (42) of the connection portion (33).

6. Torsional vibration damper according to Claim 4 or 5, **characterized in that** the sealing wall (37) serves adjacently to the seal (39) for receiving a mounting (40), via which it is centred with respect to the penetration region (42) of the connection portion (33).

7. Torsional vibration damper according to Claim 6, **characterized in that** the mounting (40) is arranged on that side of the seal (39) which faces the torque transmission space (94) of the coupling device (58).

8. Torsional vibration damper according to one of Claims 1 to 7, **characterized in that** the connection portion (33) is active as a radial central region (36) of the intermediate part (48), from which radial central region the intermediate-part portions (32, 45) in each case extend radially outwards.

9. Torsional vibration damper according to one of Claims 1 to 8, **characterized in that** the connection portion (33) is provided on an intermediate-part portion (45) and is connected fixedly in terms of rotation, but axially displaceably, in each case to the other intermediate-part portion (32) by means of a releasable connection (34).

10. Torsional vibration damper according to Claim 9, **characterized in that** the connection portion (33) is connected in each case to the other intermediate-part portion (32) via a toothing (35).

11. Torsional vibration damper according to Claim 8, 9 or 10, **characterized in that** the connection portion (33) is integrally formed on the driven-side intermediate-part portion (45) and is surrounded, at least on part of its extent, by the drive-side intermediate-part portion (32) which is rotationally connected to the connection portion (33) via the releasable connection (34).

12. Torsional vibration damper according to Claim 8, 9, 10 or 11, **characterized in that** the drive-side intermediate-part portion (32) serves, together with the damping space (13) and with the first damping unit (17), as a drive-side module (130), while the driven-side intermediate-part portion (45) serves, together with the torque transmission space (94), containing the second damping unit (50) and the coupling device (58), as a driven-side module (132), the connection portion (33) being assigned to one module (132), and being operatively connected in each case to the other module (130) via the releasable connection (34).

13. Torsional vibration damper according to one of Claims 1 to 12, **characterized in that**, starting from the connection portion (33) of the intermediate part (48), the two intermediate-part portions (32, 45) have different radial breadths of extent on account of the different radial clearances (R1, R2) of the two damping units (17, 50) with respect to the axis of rotation (124).

14. Torsional vibration damper, in particular according to one of Claims 1 to 13, with a starter-generator unit radially surrounding the first damping unit and arranged with an axial offset in relation to the second damping unit, **characterized in that** the second damping unit (50) is arranged in the region of radial extent of the starter-generator unit (114).

15. Torsional vibration damper according to one of Claims 1 to 14, **characterized in that** the drive-side intermediate-part portion (32) is intended for receiving an additional mass (29) arranged inside the damping space (13).

16. Torsional vibration damper according to one of Claims 1 to 15, with the coupling device having at least one coupling unit, **characterized in that**, at least under predeterminable operating conditions, the action of the damping device (51) can be assisted by the introduction of a defined low slip at the at least one coupling unit (76, 90).

## Revendications

1. Amortisseur de vibrations de torsion (61) dans un carter de boîte de vitesses (1), présentant une partie d'entrée qui est reliée à un entraînement (3) et est prévue pour attaquer une première unité d'amortissement (17) d'un dispositif d'amortissement, une partie intermédiaire (48) qui fait d'une part office de sortie de la première unité d'amortissement et est dotée d'éléments de commande côté entraînement (21) pour attaquer celle-ci et qui fait d'autre part office d'entrée d'une deuxième unité d'amortissement (50) du dispositif d'amortissement et est dotée d'éléments de commande côté sortie (47) pour attaquer celle-ci, et une partie de sortie qui est en liaison active avec la deuxième unité d'amortissement (50) et est prévue pour recevoir un entraînement de sortie, dans lequel au moins les éléments de commande côté entraînement (21) s'engagent dans une chambre d'amortissement contenant la première unité d'amortissement (17) et réalisée sans entrées ou sans sorties de circulation pour un fluide, et les deux unités d'amortissement sont prévues au moins essentiellement autour du même axe de rotation (124), **caractérisé en ce qu'**au moins les éléments de commande côté sortie (47) de la partie intermédiaire (48), la deuxième unité d'amortissement (50) et l'entraînement de sortie (92) sont logés dans une chambre de transmission de couple (94) d'un dispositif d'embrayage (58) qui est munie d'au moins une entrée de circulation (102) ainsi que d'au moins une sortie de circulation (104).

2. Amortisseur de vibrations de torsion selon la revendication 1, **caractérisé en ce que** la première unité d'amortissement (17) disposée à l'intérieur de la chambre d'amortissement (13) est prévue avec une plus faible distance radiale (R₁) par rapport à l'axe de rotation (124) que la deuxième unité d'amortissement (50) disposée à l'intérieur de la chambre de transmission de couple (94) avec la distance radiale (R₂).

3. Amortisseur de vibrations de torsion selon la revendication 2, **caractérisé en ce que** la deuxième unité d'amortissement (50) est prévue à une distance radiale (R₂) autour de l'axe de rotation (124), pour laquelle elle est disposée, en entourant radialement le dispositif d'embrayage (58), au moins avec une partie essentielle de son extension axiale qui recouvre axialement le dispositif d'embrayage (58).

4. Amortisseur de vibrations de torsion selon la revendication 1, 2 ou 3, avec une partie intermédiaire qui, en plus d'une section de partie intermédiaire côté entraînement présentant des éléments de commande côté entraînement, présente une section de partie intermédiaire côté sortie présentant les éléments de commande côté sortie et une section de liaison mettant en liaison active l'une avec l'autre les deux sections de partie intermédiaire, **caractérisé en ce que** la section de partie intermédiaire côté entraînement (32) est disposée à l'extérieur de la chambre de transmission de couple (94) et la section de partie intermédiaire côté sortie (45) est disposée à l'intérieur de la chambre de transmission de couple (94), et **en ce que** la partie de liaison (33) est dotée d'une zone de traversée (42) pour le passage à travers une découpe (38) d'une paroi d'étanchéité (37) prévue entre la chambre d'amortissement (13) et la chambre de transmission de couple (94), zone qui est exposée à la charge de fluide présente dans la chambre de transmission de couple (94), exclusivement côté sortie d'un joint d'étanchéité (39) associé à la découpe (38) de la paroi d'étanchéité (37).

5. Amortisseur de vibrations de torsion selon la revendication 4, **caractérisé en ce que** la paroi d'étanchéité (37) est logée de façon étanche au fluide sur le carter de boîte de vitesses (1) radialement par une extrémité, et reçoit radialement à l'autre extrémité le joint d'étanchéité (39) coopérant avec la zone de traversée (42) de la section de liaison (33).

6. Amortisseur de vibrations de torsion selon la revendication 4 ou 5, **caractérisé en ce que** la paroi d'étanchéité (37) sert, à proximité du joint d'étanchéité (39), pour loger un palier (40), par lequel elle est centrée par rapport à la zone de traversée (42) de la section de liaison (33).

7. Amortisseur de vibrations de torsion selon la revendication 6, **caractérisé en ce que** le palier (40) est disposé sur le côté du joint d'étanchéité (39) tourné vers la chambre de transmission de couple (94) du dispositif d'embrayage (58).

8. Amortisseur de vibrations de torsion selon l'une quelconque des revendications 1 à 7, **caractérisé en ce que** la section de liaison (33) est active comme zone centrale radiale (36) de la partie intermédiaire (48), à partir de laquelle les sections de partie intermédiaire (32, 45) s'étendent chacune radialement vers l'extérieur.

9. Amortisseur de vibrations de torsion selon l'une quelconque des revendications 1 à 8, **caractérisé en ce que** la section de liaison (33) est prévue sur une section de partie intermédiaire (45) et est assemblée, de façon calée en rotation mais axialement déplaçable, à l'autre section de partie intermédiaire respective (32) au moyen d'un assemblage amovible (34).

10. Amortisseur de vibrations de torsion selon la revendication 9, **caractérisé en ce que** la section de liaison (33) est reliée à l'autre section de partie intermédiaire respective (32) au moyen d'une denture (35).

11. Amortisseur de vibrations de torsion selon la revendication 8, 9 ou 10, **caractérisé en ce que** la section de liaison (33) est formée sur la section de partie intermédiaire côté sortie (45) et est entourée au moins sur une partie de son extension par la section de partie intermédiaire côté entraînement (32), qui est en liaison de rotation avec la partie de liaison (33) au moyen de l'assemblage amovible (34).

12. Amortisseur de vibrations de torsion selon la revendication 8, 9, 10 ou 11, **caractérisé en ce que** la section de partie intermédiaire côté entraînement (32), en association avec la chambre d'amortissement (13) et la première unité d'amortissement (17), sert de module côté entraînement (130), tandis que la section de partie intermédiaire côté sortie (45), en association avec la chambre de transmission de couple (94), contenant la deuxième unité d'amortissement (50) et le dispositif d'embrayage (58), sert de module côté sortie (132), dans lequel la section de liaison (33) est associée à un module (132) et est en liaison active avec l'autre module respectif (130) au moyen de l'assemblage amovible (34).

13. Amortisseur de vibrations de torsion selon l'une quelconque des revendications 1 à 12, **caractérisé en ce que**, à partir de la section de liaison (33) de la partie intermédiaire (48), les deux sections de partie intermédiaire (32, 45) disposent de largeurs d'extension radiale différentes, en raison des distances radiales différentes (R₁, R₂) des deux unités d'amortissement (17, 50) par rapport à l'axe de rotation (124).

14. Amortisseur de vibrations de torsion, en particulier selon l'une quelconque des revendications 1 à 13, avec une unité de générateur de démarrage entourant radialement la première unité d'amortissement et disposée avec un décalage axial par rapport à la deuxième unité d'amortissement, **caractérisé en ce que** la deuxième unité d'amortissement (50) est disposée dans la zone d'extension radiale de l'unité de générateur de démarrage (114)

15. Amortisseur de vibrations de torsion selon l'une quelconque des revendications 1 à 14, **caractérisé en ce que** la section de partie intermédiaire côté entraînement (32) est prévue pour recevoir une masse additionnelle (29) disposée à l'intérieur de la chambre d'amortissement (13).

16. Amortisseur de vibrations de torsion selon l'une quelconque des revendications 1 à 15, avec un dispositif d'embrayage disposant d'au moins une unité d'embrayage, **caractérisé en ce que** l'action du dispositif d'amortissement (51) peut être assistée, au moins dans des conditions de fonctionnement prédéterminables, par l'introduction d'un faible glissement défini sur ladite au moins une unité d'embrayage (76, 90).
